# EUROPEAN PATENT APPLICATION

(11) **EP 4 844 671 A1**
(43) Date of publication of application: **25.11.2026**
(21) Application number: 26202264.3
(22) Date of filing: 01.09.2026
(51) Int. Cl.: G06T 5/70

(54) **METHOD AND DEVICE FOR DOSE-INVARIANT MODIFICATION OF RELATIVE DETAIL CONTRASTS IN POISSON-LIMITED IMAGES**

(71) Applicant: Tabel, Stefan, 82340 Feldafing (DE)
(72) Inventor: Tabel, Stefan, 82340 Feldafing (DE)
(74) Representative: Bach, Alexander

(57) **Abstract**

A method for image processing in Poisson-limited imaging, in particular X-ray fluoroscopy. An input image (0101) is decomposed into detail coefficients (D1, D2, D4, D8) and a basis component (B) by a non-decimating multi-scale decomposition using cascaded low-pass filters (0103, 0104, 0105, 0106). Each detail coefficient is divided by the basis component (0107, 0108, 0109, 0110), creating a dose-invariant working space. The normalized coefficients are multiplied by empirically calibrated scaling factors (0111, 0112, 0113, 0114). The output image (0102) is reconstructed multiplicatively by combining the scaled coefficients with a perceptual basis function.

The non-decimating decomposition is shift-invariant, enabling correction by a single global scalar per frequency band. Optional extensions include temporal filtering with motion-adaptive mixing and gamma correction in a constant-noise-amplitude domain. Real-time implementations on FPGA with streaming architecture and on GPU with optimized memory hierarchy are disclosed.

## Description

### Technical Field

The invention relates to image enhancement and noise reduction in photon-limited X-ray imaging, in particular in radiography and fluoroscopy.

### Prior Art

In digital X-ray imaging, a flat-panel detector (FPD) generates digital images whose noise follows Poisson statistics. The standard deviation of the noise is proportional to the square root of the intensity. To improve the visibility of fine structures in such photon-limited images, methods based on multi-scale transformation (MST) have been employed in medical image processing since the 1990s. Fluoroscopy extends radiographic image processing by the temporal dimension, employing additional temporal filters for noise reduction in image sequences.

From EP 0 527 525 A2 (Vuylsteke, Schoeters; applicant: AGFA-GEVAERT N.V.; priority: 14.08.1991), a method for contrast enhancement in radiography is known, in which an input image is decomposed into detail images at various resolution levels and a residual image by means of a decimating Laplacian pyramid according to Burt and Adelson (P. J. Burt, E. H. Adelson, The Laplacian Pyramid as a Compact Image Code, IEEE Transactions on Communications, Vol. 31, No. 4, April 1983, pp. 532-540). The pixel values of the detail images are modified by applying nonlinear, monotonically increasing, odd conversion functions, and the output image is reconstructed by additive accumulation of the modified detail images and the residual image.

This architecture was extended to include temporal filtering for fluoroscopy. M. Hensel, T. Pralow, R.-R. Grigat, Real-Time Denoising of Medical X-Ray Image Sequences: Three Entirely Different Approaches, ICIAR 2006, LNCS 4142, Springer, 2006, pp. 479-490, describe a normalization of the difference signals to the local noise standard deviation and an adaptively controlled spatial-temporal averaging within a decimating Laplacian pyramid. From WO 2005/029 409 A2 (Florent, Samson, Picard: Medical imaging system with temporal filter; applicant: Koninklijke Philips Electronics N.V.; priority: 22.09.2003), a method is known in which recursive temporal filters are applied to the subbands of a decimating MST. G. Schoonenberg, M. Schrijver, Q. Duan, R. Kemkers, A. Laine, Adaptive spatial-temporal filtering applied to x-ray fluoroscopy angiography, Proc. SPIE 5744, Medical Imaging 2005: Visualization, Image-Guided Procedures, and Display, 2005, describe an adaptive filtering method in which the motion probability, derived from a normalized difference image of consecutive frames, controls the mixing between temporally and spatially filtered image components.

Current prior art improvements relate to noise modeling and reduction. From EP 3 224 800 B1 (Schlüter, Maack, Lundt; applicant: Koninklijke Philips N.V.; priority: 24.11.2014; also published as US 10 282 823 B2), a method is known in which an increase in X-ray dose is simulated. The method comprises a decimating Laplacian pyramid, a theoretical detector-specific noise model, a normalization of the detail coefficients to the model-based estimated local noise standard deviation, and a nonlinear noise reduction function.

### Deficiencies of the Prior Art

Despite improved noise estimation and modeling, the known methods exhibit structural properties that determine the effort required for calibration, parameterization, and implementation.

M. Hensel, B. Eiben, R.-R. Grigat, T. Pralow, Evolution of Uncorrelated and Correlated Noise in Gaussian and Laplacian Image Pyramids, Proceedings of the 6th WSEAS International Conference on Signal Processing, Robotics and Automation, Corfu, Greece, February 2007, pp. 71-76, show that the noise behavior in the layers of a decimating Laplacian pyramid depends on the position of the coefficient in the sampling grid. Coefficients at even and odd grid positions exhibit different noise levels; the deviation amounts to approximately 2.6%. The decimating Laplacian pyramid is therefore not shift-invariant. Correction of the detail coefficients by a single scalar factor per frequency band is an approximation in a decimating pyramid. The known methods therefore use position-dependent correction functions such as the normalization to a model-based local noise estimator described in EP 3 224 800 B1, a local variance estimation as a percentile within a neighborhood, or nonlinear conversion functions with multiple parameters per frequency band.

Decimating multi-scale decompositions exhibit aliasing as a further structural deficiency alongside the position-dependent noise propagation. The low-pass filters preceding decimation have finite stopband attenuation; signal components above the Nyquist limit are folded back into lower frequency bands during decimation and accumulate across the cascade of decomposition stages. The detail coefficients of a decimating pyramid therefore contain signal contributions from frequency bands that are not structurally assigned to them.

The known methods process the detail coefficients in an SNR domain or CNR domain. Since the noise standard deviation used for normalization depends on the incoming dose rate, the normalized coefficients are not dose-invariant. A change in dose rate requires readjustment of the processing parameters.

The nonlinear conversion functions in the prior art, in particular the tanh-based function with the stated parameterization described in EP 3 224 800 B1, compensate for the position-related noise inhomogeneity, adapt the gain to the local signal level, and perform contrast modification. The individual effects cannot be addressed individually, i.e. by separate functions.

The known methods reconstruct the output image by additive accumulation of the modified detail coefficients and the basis component. The detail coefficients act independently of the local signal level of the basis component, so that ratios of variances and signal levels cannot be readjusted and displayed in a dose-consistent manner.

The method described in EP 3 224 800 B1 separates noise from the object signal and corrects the noise component to a target dose. The correction is limited to the noise component and does not capture the change in the total standard deviation at the basis, which arises jointly from the unchanged object component and the reduced noise component in an actual dose increase.

Furthermore, the decimating Laplacian pyramid requires complete calculation and intermediate storage of all layers before reconstruction can begin. The decimation and interpolation operations require additional memory accesses for aligning data streams between layers of different resolution.

### Problem

Medical X-ray imaging is known for a fundamental tradeoff between image quality and radiation protection. An increased X-ray dose increases the SNR of the image and thus the visibility of fine structures; at the same time, any increase in X-ray dose additionally damages the patient's tissue, so that according to the ALARA principle, the lowest possible dose for sufficient image quality must always be sought.

The object of the invention is therefore to provide an improved method and device for enhancing a visibility of fine structures in medical X-ray images obtained at a comparatively low X-ray dose.

### Solution

This object is achieved according to the invention by a method and a device according to the independent claims. Advantageous embodiments are the subject of the dependent claims.

The method according to the invention comprises spatial image enhancement and, optionally, temporal filtering adapted thereto for image sequences. The input image is decomposed into detail coefficients and a basis component by means of a non-decimating and thus shift-invariant multi-scale decomposition. The detail coefficients are normalized to an associated basis or low-pass component, creating a dose-invariant working space. The normalized detail coefficients are corrected with empirically calibrated scalar scaling factors per frequency band, without requiring a theoretical dose model. The corrected detail image is generated by multiplicative reconstruction incorporating the basis component. The scaling of the details simulates an increased dose while maintaining the ratio of the basis component to noise and object variance. Optionally, a temporal recursive filter with motion-adaptive mixing may be placed upstream of the scaling. Optionally, a gamma correction may be applied before scaling to suppress noise below the perception threshold. The method is suitable for implementation on a field-programmable gate array (FPGA) or a parallel computing unit with shader processors (GPU).

### Brief Description of Drawings

- **Fig. 1**: shows the signal path of the spatial correction according to the invention with non-decimating multi-scale decomposition, normalization of the detail coefficients by the basis component, scaling by means of band-specific scaling factors, and multiplicative reconstruction.
- **Fig. 2**: shows the scaling factor σ_ratio as a function of dose amplification factor for different object-to-noise ratios r, comparing the complete fundamental formula to the prior-art approximation 1/√DF.
- **Fig. 3**: shows a calibration method for determining the band-specific scaling factors σ_ratio from a pair of video sequences at different dose rates by means of temporal differencing, multi-scale decomposition, and robust estimation of standard deviation.
- **Fig. 4**: shows the measured normalized noise standard deviation per frequency band compared to variance propagation at two different dose rates.
- **Fig. 5**: shows histograms of the normalized detail coefficients for four frequency bands at high dose, low dose, and after scaling with σ_ratio.
- **Fig. 6**: shows the forward signal flow through a mixer module with an infinite impulse response (IIR) filter, a motion detector, and subsequent σ_ratio scaling.
- **Fig. 7**: shows a filter module with bypass as a reusable building block for a pipeline architecture for non-decimating multi-scale decomposition with four channels and latency-balanced bypasses.
- **Fig. 8**: shows a pipeline architecture for non-decimating multi-scale decomposition with runtime result accumulation, consisting of cascaded filter modules with layer processing modules and a concluding basis module.
- **Fig. 9**: shows an overall system with a domain cascade in which the detail coefficients pass through three processing stages in different working spaces and are subsequently reconstructed in a perception domain.
- **Fig. 10**: shows a signal cross-section through a low-dose X-ray image illustrating the effect of amplitude-controlled gamma correction.

### Detailed Description

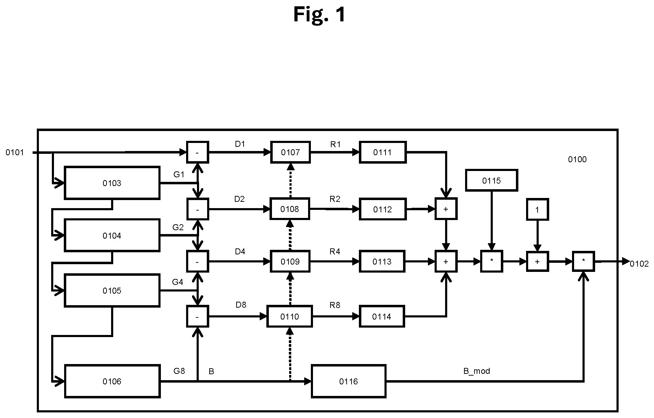

Figure 1 shows the core signal path of the spatial correction according to an embodiment of the invention. The processing is performed by a spatial correction unit 0100. An input image 0101 is decomposed into detail coefficients and a basis component by a non-decimating multi-scale decomposition. Cascaded low-pass filters 0103, 0104, 0105, 0106 produce a sequence of low-pass images G1, G2, G4, and G8. All low-pass images retain the full spatial resolution of the input image. The basis component B corresponds to the low-pass image of the coarsest stage 0106.

The detail coefficients D1, D2, D4, and D8 are obtained by forming differences between successive low-pass images. Each detail coefficient is divided by the basis component B (0107, 0108, 0109, 0110), yielding the normalized coefficients R1, R2, R4, and R8. The normalization transforms the detail coefficients into a dose-invariant working space.

Each normalized coefficient is multiplied by a band-specific scaling factor σᵣₐₜᵢₒ (0111, 0112, 0113, 0114). The scaled coefficients are summed. The sum is multiplied by a boost factor 0115. The constant 1 is added to the sum.

The output image 0102 is reconstructed by multiplication with a modified basis component B_{mod}. B_{mod} is generated from the basis component B via basis gamma processing 0116. The reconstruction follows the formula Iₒᵤₜ = B_{mod} · (1 + boost · Σₖ Rₖ · σ_{ratio,k}).

The following sections describe the individual components in detail: the non-decimating multi-scale decomposition, the D/B normalization, the empirical calibration of the scaling factors, the temporal filtering with motion-adaptive mixing, the gamma correction in the D/√B working space, and the hardware implementations on FPGA and optimization for GPU. Combining all components allows for integrating D/B dose manipulation in standard fluoroscopic image processing pipelines.

### Non-Decimating Multi-Scale Decomposition

The method according to the invention decomposes an input image into a sequence of detail coefficients D₁, D₂, ..., D_{N} and a basis component B (Figure 1) by means of a non-decimating Difference-of-Low-Pass transformation (DOLP). The DOLP decomposition principle was first described in J. L. Crowley, R. M. Stern, Fast Computation of the Difference of Low-Pass Transform, CMU-RI-TR-82-18, The Robotics Institute, Carnegie-Mellon University, November 1982.

The input image is converted into a sequence of low-pass images L₀, L₁, ..., L_{N} by iterative application of a two-dimensional low-pass filter. L₀ corresponds to the input image. Each low-pass image L_{{k+1}} is produced by exponentially repeated application of the low-pass filter to the preceding low-pass image Lₖ. A characteristic feature of the disclosed method is that all low-pass images retain the full spatial resolution of the input image. No subsampling (decimation) takes place between successive stages.

The detail coefficients Dₖ of a layer k are formed as the difference of successive low-pass images: ${D}_{k} = {L}_{k} - {L}_{\left\{k+1\right\}}$

Each detail image Dₖ contains the image structures of a particular spatial frequency band. The basis component B corresponds to the low-pass image of the coarsest stage L_{N} and contains the low-frequency image content including the mean intensity. For FPGA implementations in particular, the basis component B for a detail image Dₖ can be approximated by L_{{k+1}} instead of L_{N}.

A preferred embodiment employs or approximates a two-dimensional Gaussian filter with a scaling of factor 2 per stage as the low-pass filter. The detail coefficients then represent octave-spaced frequency bands.

The invention is not limited to a Gaussian filter. Alternative embodiments may implement the low-pass filter as a binomial filter, a box filter, or another separable or non-separable low-pass filter. The scaling is likewise not limited to factor 2; any scaling factor that produces a decomposition into frequency bands may be used. Embodiments are also conceivable that do not implement explicit frequency band separation but instead implement detail-basis separation as commonly used in photographic image processing. The decisive factor is shift-invariance, e.g. implemented by the decomposition operating at full spatial resolution at all stages and without subsampling. The prior art uses separable binomial filters of extent 1×5 and 5×1, owing to advantages in computability, cutoff frequency, and residuals.

A further embodiment calculates the low-pass stages and the associated detail coefficients by a trained machine learning model that produces the same non-decimated multi-scale space. An artificial neural network can also implement an embodiment provided it is non-decimating and no subsampling occurs.

Since the decomposition contains no decimation operator, the resulting detail coefficients are shift-invariant: a shift of the input image by one pixel causes an identical shift of all detail coefficients and the basis component without changing their values. Shift-invariance is a structural property of the non-decimating decomposition. Since no decimation grid exists, the detail coefficients do not depend on the phase position of image structures in the sampling grid. Noise propagates homogeneously through all layers of the decomposition, and correction of the detail coefficients by a single scaling factor per frequency band is exact. The position-independent noise propagation avoids Moiré artifacts when displaying Weber contrasts and prevents noise on homogeneous areas from forming coherent spatial patterns. Both effects lie in the most sensitive range of human contrast perception and are perceived far more strongly than unstructured noise of equal energy.

### D/B Normalization

The detail coefficients Dₖ are normalized by the basis component B (Figure 1). The normalized detail coefficient Rₖ of a pixel at position (x, y) is given by: ${R}_{k} \left(x, y\right) = {D}_{k} \left(x, y\right) / B \left(x, y\right)$

The normalized coefficient R corresponds to the relative contrast of the image structures in frequency band k with respect to the local low-pass component. This quotient is known in perceptual physics as the Weber contrast.

The intensity I measured at the detector is described by the Beer-Lambert law: $I \left(x, y\right) = {I}_{0} ⋅ exp \left(-μ\left(x, y\right)⋅d\left(x, y\right)\right)$

Here Io denotes the incident dose rate, µ the position-dependent attenuation coefficient, and d the material thickness. The additive, signal-independent noise component (dark current, readout noise) can be neglected since Poisson noise dominates the total noise level in photon-limited X-ray imaging.

The MST yields detail coefficients Dₖ and basis component B, both of which depend linearly on the intensity I. Since I is proportional to Io: ${D}_{k} \left(x, y\right) = {I}_{0} ⋅ {{D}^{˜}}_{k} \left(x, y\right) B \left(x, y\right) = {I}_{0} ⋅ {B}^{˜} \left(x, y\right)$

Here *D̃ₖ* and *B̃* denote the dose-independent components, equivalently defined by normalization to I₀. I₀ cancels in the quotient: ${R}_{k} \left(x, y\right) = {D}_{k} / B = \left({I}_{0}⋅{{D}^{˜}}_{k}\right) / \left({I}_{0}⋅{B}^{˜}\right) = {{D}^{˜}}_{k} / {B}^{˜}$

The normalized coefficients Rₖ are therefore dose-invariant. Normalizing the detail coefficients Dₖ to the basis B eliminates the dependence of the normalized coefficients Rₖ on the incident dose rate I₀.

Each detail coefficient Dₖ contains two components: an object component D_{obj,k} and a noise component D_{noise,k}: ${D}_{k} = {D}_{obj , k} + {D}_{noise , k}$

Both summands are thereby normalized in D/B space; Rₖ can be expanded to include noise: $Rk = {D}_{obj , k} / B + {D}_{noise , k} / B$

Both components can be considered independently. The noise component D_{noise,k/B} scales with dose, since the noise is Poisson-distributed and can thus be estimated from the basis B via the square root function. For a Poisson process, as stated above, the variance equals the mean: $Var \left(N\right) = λ$

A simple but common noise estimator in fluoroscopy calculates the mean via propagation through the low-pass filters of the MST, so that the basis on a constant object can be regarded as the noise variance. The noise variance in D/B space on a constant object thus scales linearly with the basis and with intensity: ${{σ}^{2}}_{noise , k} = Var \left(D_k/B\right) ∝ B / {B}^{2} = 1 / B$

If the object is not constant over the spatial support of the low-pass filter, the object has its own object variance σ²_{obj,k}. The object component D_{obj,k}/B without noise is dose-invariant. According to the Beer-Lambert law, B and D_{obj,k} scale linearly with the incident dose rate I₀, so that the influence cancels by division. The normalization simultaneously weights the object variance according to the Weber contrast, which is perceptually optimal.

The characteristic feature of the invention is not the division as such, but that the detail coefficients of a non-decimating multi-scale decomposition are normalized relative to the associated local low-pass component, creating a dose-invariant working space in which contrast modification and noise correction can be performed by scaling with a single factor per frequency band.

The lowest low-pass L_{N} of the decomposition is preferably used as the basis component B. An alternative embodiment employs a separate basis component Bₖ = L_{{k+1}} for each stage k.

The proportionality of the local noise variance to the basis component B in the Poisson regime, shown in the preceding derivation, has an immediate algebraic consequence. If σ denotes a local noise standard deviation estimator of the same image layer, then σ² ∝ B up to a layer-wise constant factor. The division of the detail coefficients by the basis component according to the invention is therefore mathematically equivalent to normalization with the square of such a standard deviation estimator and, more generally, to normalization with any reference quantity proportional to the local noise variance. Normalization with the standard deviation itself, as known from the prior art, leads instead to a signal-to-noise space and is not dose-invariant.

Further embodiments therefore perform the normalization with a reference quantity proportional to the local noise variance that is not derived from the basis component of the multi-scale decomposition itself but from an estimator equivalent thereto. A further embodiment approximates the normalization by a trained machine learning model operating in the working space normalized by said component.

### Scaling and Reconstruction

Without loss of generality, the object variance can be combined with the noise variance so that both are processed further as total variance: ${{σ}^{2}}_{total , k} = {{σ}^{2}}_{obj , k} + {{σ}^{2}}_{noise , k}$

According to one possible embodiment, two acquisitions of the same object at different dose rates are used, such that an object in each layer must be described by two total variances. One image is a low-dose image, described by a standard deviation σ_{source} at each pixel in each layer. The same object is also acquired as a high-dose image, characterized in a second MST by σ_{target}.

A scalar scaling factor σ_{ratio,k} is introduced for each frequency band k. This factor indicates the ratio of total standard deviations in D/B space between a target image at a high target dose and the input image at the actual dose: ${σ}_{ratio , k} = {σ}_{total , target , k} / {σ}_{total , source , k}$

In this quotient, σᵣₐₜᵢₒ is position-independent, as shown by the fundamental formula in the calibration section. Only the normalization by the non-decimated basis component enables correction by a single position-independent scalar per frequency band.

The scaling factor is a global scalar per frequency band. It captures the total change of the signal including the object component, not only the noise component. The determination of the scaling factors, for example by empirical calibration, is the subject of a subsequent section. The normalized detail coefficients Rₖ are multiplied by σ_{ratio,k} and then transformed back from D/B space by multiplication with the basis component B: $D {′}_{k} \left(x, y\right) = {R}_{k} \left(x, y\right) ⋅ {σ}_{ratio , k} ⋅ B \left(x, y\right)$

The output image is obtained by additive accumulation of the corrected detail coefficients and the basis component (DOLP inversion): ${I}_{out} \left(x, y\right) = B \left(x, y\right) + {\sum }_{k} D {′}_{k} \left(x, y\right)$

Since σ_{ratio,k} is less than 1 for dose amplification factors DF > 1, the corrected detail coefficients D'ₖ are attenuated relative to the original detail coefficients Dₖ. Contrast enhancement arises not from the scaling alone but from the multiplicative reconstruction via a perceptually transformed basis described in the dose factor section.

Substitution and factoring out B yields a simplified reconstruction: ${I}_{out} \left(x, y\right) = B \left(x, y\right) ⋅ \left(1+Σ_k {R}_{k}\left(x, y\right)⋅{σ}_{ratio , k}\right)$

This second representation of Iₒᵤₜ(x, y) reduces the number of multiplications and type conversions when implementing on an FPGA. The function remains an additive DOLP inversion with back-transformation from D/B space.

The back-transformation by B causes the corrected details to act proportionally to the local signal level, corresponding to a simple Retinex method. This is a direct consequence of D/B normalization: what was normalized relative to the local low-pass is reconstructed relative to the local low-pass, while the correction by the scalar factor is normalized to the basis component.

The known prior art methods divide the detail coefficients by a noise estimator σ, correct non-scalarly in the signal-to-noise domain, and transform back by multiplication with σ. Processing takes place in a decimating Laplacian pyramid. The method according to the invention divides by the basis component B, corrects scalarly per layer in D/B space, and transforms back by multiplication with B. Processing takes place in a non-decimating DOLP decomposition.

A perceptual transformation can optionally be applied to the basis, for example f(B) = √B (Anscombe transformation). This is independent of the reconstruction. This square-root basis representation is known in the prior art as perceptually optimal and corresponds to an SNR domain. Perceptual contrast manipulation by gamma functions according to the prior art is also performed in this domain.

A further embodiment realizes the band-wise scaling with the correction factors σ_{ratio,k} and the subsequent nonlinear processing of the normalized detail coefficients by a trained machine learning model that uses the scaled detail coefficients as input.

In general, a scalar scaling factor need not be present as a scalar in order to act as one. For example, a gamma correction may well implement a combination of scalar band correction according to the invention with additional denoising and contrast enhancement. The decisive factor remains the creation of the dose-invariant working space according to the stated characteristics, not the dose modification by a uniquely specified operation.

A further embodiment uses the disclosed methods as a ground-truth generator: input images are processed by a method according to the invention, and the resulting output data serve as training data for a machine learning model, in particular an artificial neural network. The model thus trained reproduces the disclosed processing in whole or in part; the training may target individual stages, such as the normalization or the band-wise scaling, or the entire processing chain from input image to output image.

### Dose Amplification Factor

The dose amplification factor DF is a scalar user parameter that determines the strength of the dose simulation. It indicates by what factor the simulated dose exceeds the actual dose.

For spatial correction, DF enters the fundamental formula by scaling the noise variance inversely with DF: ${{σ}^{2}}_{noise} \to {{σ}^{2}}_{noise} / DF$

The resulting scaling factors σ_{ratio,k} transform each frequency band as if the image had been acquired at DF times higher dose.

For temporal filtering in fluoroscopy, the dose factor determines the IIR filter constant: $α = 2 / \left(DF+1\right)$

This relation follows the convention of the exponentially weighted average: α corresponds to an effective averaging over DF consecutive frames.

The dose factor DF can control the spatial correction or the temporal filtering or both processing paths. When controlling both paths, spatial and temporal correction target the same dose level. At standstill, both paths act cumulatively; during motion, the mixer reduces the temporal contribution, and the spatial correction operates alone.

Correction is physically unbounded upward in D/B space: more dose always yields a higher signal-to-noise ratio. The upper limit is not a physical one but one of display or application.

A preferred embodiment derives DF from the unused dynamic range of the display system: $DF = {B}_{max} / {B}_{mean}$

Here Bₘₑₐₙ is the mean detector intensity, regulated to a constant operating point by the automatic dose rate control of the fluoroscopy system, and Bₘₐₓ is the maximum displayable intensity, determined by the dynamic range of the display system. This relation is generally known as a display constraint and standardized by DICOM (Fetterly KA, Blume HR, Flynn MJ, Samei E. Introduction to grayscale calibration and related aspects of medical imaging grade liquid crystal displays. J Digit Imaging. 2008 Jun;21(2):193-207. doi: 10.1007/s10278-007-9022-y. PMID: 17333412; PMCID: PMC3043865.). The choice of basis transformation determines the available headroom in display space: if a square root transformation f(B) = √B is applied to the basis component, the display range grows with √DF instead of DF. Such square root transformations of the basis for displaying X-ray images are known per se (e.g., Philips US 7 792 346 B2; GE Healthcare US 7 333 644 B2). An alternative embodiment uses a logarithmic transformation of the basis.

A typical fluoroscopy operating setting with Bₘₑₐₙ = 500 counts and Bₘₐₓ = 3500 counts yields DF = 7. The spatial correction transforms the frequency bands as if the image had been acquired at sevenfold dose.

An alternative embodiment derives DF from a target signal-to-noise ratio, such that the scaling factors σ_{ratio,k} transform the detail coefficients to a desired noise level.

A further alternative embodiment uses DF as a fixed, application-specific parameter selected according to the organ program or examination protocol.

### Fundamental Formula

Based on the total variance in D/B space introduced above, the ratio of object to noise standard deviation is defined as the object-to-noise ratio r: $r = {σ}_{obj} / {σ}_{noise}$

This ratio is layer-independent since the effective gain factor gₖ cancels in numerator and denominator. When a standard deviation propagates through a defined transfer function, such as through a layer of a DOLP, a variance is attenuated by a constant scalar.

An increase in dose rate by the dose amplification factor DF causes the photon count measured at the detector to increase by the factor DF. Since noise is Poisson-distributed, the absolute noise standard deviation increases with the square root of the photon count, while intensity increases linearly. The noise variance in D/B space therefore decreases by the factor DF: ${{σ}^{2}}_{noise , target} = {{σ}^{2}}_{noise , source} / DF$

The object component in D/B space is dose-invariant, as shown in the preceding section. An increase in dose rate does not change the object variance: ${{σ}^{2}}_{obj , target} = {{σ}^{2}}_{obj , source} = {{σ}^{2}}_{obj}$

The total standard deviation at the target dose is obtained by substitution: ${σ}_{target} = √ \left({{σ}^{2}}_{obj}+{{σ}^{2}}_{noise}/DF\right)$

The scaling factor σᵣₐₜᵢₒ is the ratio of total standard deviations at target dose and source dose: ${σ}_{ratio} = {σ}_{target} / {σ}_{source} = √ \left({{σ}^{2}}_{obj}+{{σ}^{2}}_{noise}/DF\right) / √ \left({{σ}^{2}}_{obj}+{{σ}^{2}}_{noise}\right)$

Dividing numerator and denominator by σₙₒᵢₛₑ and substituting r = σ_{obj} / σₙₒᵢₛₑ yields the closed form: ${σ}_{ratio} = √ \left({r}^{2}+1/DF\right) / √ \left({r}^{2}+1\right)$

This formula is referred to as the fundamental formula. It describes the scaling factor as a function of two parameters: the object-to-noise ratio r and the dose amplification factor DF. The fundamental formula applies to each frequency band; the effective gain factor gₖ does not enter since it cancels in the quotient r.

The limiting cases of the fundamental formula are physically instructive. For DF = 1: ${σ}_{ratio} = √ \left({r}^{2}+1\right) / √ \left({r}^{2}+1\right) = 1$

No scaling takes place at unchanged dose. For DF → ∞: ${σ}_{ratio} \to √ \left({r}^{2}\right) / √ \left({r}^{2}+1\right) = r / √ \left({r}^{2}+1\right)$

This limit is finite and nonzero. An arbitrarily high dose increase can suppress noise arbitrarily strongly; however, the object component remains as a lower bound of the total standard deviation. The fundamental formula thus captures both components-object and noise-and thereby differs fundamentally from the prior art.

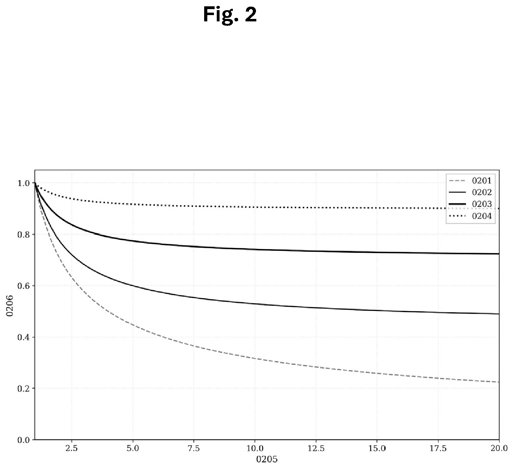

The prior art, in particular EP 3 224 800 B1, normalizes the detail coefficients to the noise standard deviation √B and corrects the noise component separately. This yields σᵣₐₜᵢₒ = 1/√DF. This approximation is a special case of the fundamental formula for r → 0, i.e., when the object signal is negligible relative to noise. The approximation 1/√DF deviates significantly from the fundamental formula in the general case, particularly at higher dose amplification factors (Figure 2 ).

Figure 2 shows the scaling factor σ_ratio as a function of the dose amplification factor DF for different values of the object-to-noise ratio r. The abscissa (0205) shows the dose amplifica-tion factor DF. The ordinate (0206) shows the scaling factor σ_ratio. The dashed curve (0201) shows the prior-art approximation σ_ratio = 1/√DF, which corresponds to the special case r = 0. Three solid curves show the scaling factor according to the complete fundamen-tal formula for r = 0.5 (0202), r = 1 (0203), and r = 2 (0204). At DF = 1, all curves coincide at σ_ratio = 1. As the dose amplification factor increases, the curves diverge. The prior-art approximation (0201) decreases monotonically toward zero. The curves of the fundamental formula, by contrast, converge toward finite limit values of r/√(r² + 1), reflecting the object component which remains as an irreducible lower bound of the total standard deviation regardless of dose. At DF = 20, the prior-art approximation yields σ_ratio ≈ 0.22, whereas the fundamental formula yields σ_ratio ≈ 0.49 for r = 0.5 (0202), σ_ratio ≈ 0.72 for r = 1 (0203), and σ_ratio ≈ 0.90 for r = 2 (0204). The figure demonstrates that the prior-art approximation systematically underestimates the required scaling factor in the presence of object signal, with the deviation increasing both with the dose amplification factor and with the object-to-noise ratio. The method according to the invention therefore uses the com-plete fundamental formula, which explicitly accounts for the object component via the parameter r.

Taking the frequency-band-dependent correction by the system parameter α into account, the complete scaling factor for a frequency band k is: ${σ}_{ratio , k} = √ \left({r}^{2}+1/DF\right) / √ \left({r}^{2}+1\right) ⋅ {g}_{k}$

Here gₖ = 2 ^{(k·(α-1)/2)} is the effective gain factor according to the preceding section. The method according to the invention thus requires two system parameters (r and α) and one user parameter (DF) to determine the scaling factors for all frequency bands and arbitrary dose amplification factors.

### Frequency-Band-Dependent Correction

The noise variance in D/B space is proportional to 1/B. The distribution of noise variance across the individual frequency bands depends on the modulation transfer function (MTF) of the system. The noise power spectrum (NPS) is generally not white.

According to the Wiener-Khinchin theorem (see, e.g., https://en.wikipedia.org/wiki/Wiener-Khinchin_theorem), the noise variance in a frequency band k results from the convolution of the NPS with the squared frequency response |Hₖ(f)|² of the associated bandpass filter. The theorem presupposes a weak-stationary noise process. This condition is established during calibration by homogeneous irradiation (flatfield) and by normalization to the local intensity. ${{σ}^{2}}_{noise , k} ∝ \int NPS \left(f\right) ⋅ {\left|{H}_{k}\left(f\right)\right|}^{2} df$

The effective gain gₖ of a frequency band k is defined as the ratio of the noise standard deviation at band k to the noise standard deviation at the finest band: ${g}_{k} = {σ}_{noise , k} / {σ}_{noise , 1}$

The NPS of an X-ray detector can be empirically parameterized as a power law (see, e.g., https://en.wikipedia.org/wiki/Colors_of_noise):$NPS \left(f\right) ∝ {f}^{∧} \left(-α\right)$

Here α is a system-specific parameter. For α = 0, the NPS is white (frequency-independent); for α > 0, the noise is spatially correlated and decreases toward high frequencies. Substituting the power law into the integral formula yields the closed-form expression for a non-decimating DOLP decomposition with octave-wise scaling: ${g}_{k} = {2}^{∧} \left(k⋅\left(α-1\right)/2\right)$

For α = 0 (white noise), this simplifies to gₖ = 2 ^{(-k/2)}. A white noise model overestimates the noise variance in the finest frequency bands by a factor of approximately 2, since it does not account for the attenuation toward high frequencies caused by the system MTF.

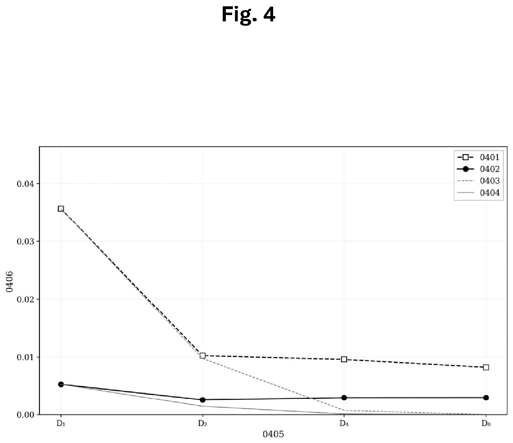

Figure 4 shows the measured normalized scatter σₖ/I̅ per frequency band compared to the theoretical propagation. At both dose rates, the propagation model systematically underestimates the actual noise scatter, particularly in the finest frequency band D1. The discrepancy between measurement and model establishes the necessity of empirical calibration of the scaling factors σᵣₐₜᵢₒ.

### Empirical Calibration

A preferred embodiment determines the scaling factors σ_{ratio,k} empirically from two video sequences. Both sequences are acquired with the same static object but at different dose rates.

A noise dataset is obtained from each sequence by temporal differencing of consecutive images. Since the object is static, it cancels in the difference; the remaining dataset contains only noise. Each noise dataset is decomposed into frequency bands by means of the non-decimating DOLP and normalized to the mean intensity.

The standard deviation per frequency band is determined using the MAD estimator (Median Absolute Deviation) according to D. L. Donoho, I. M. Johnstone, Ideal spatial adaptation by wavelet shrinkage, Biometrika, Vol. 81, No. 3, 1994, pp. 425-455: ${σ}_{MAD} = 1.4826 ⋅ median \left(\left|x-median\left(x\right)\right|\right)$

The MAD estimator has a breakdown point of 50% and is therefore robust against outliers. The scaling factor is obtained as the quotient of the estimated standard deviations: ${σ}_{ratio , k} = {σ}_{target , k} / {σ}_{source , k}$

The scaling factors determined in this manner are object-independent: only noise standard deviations enter the quotient, which are already object-independent. These propagate as NPS through the MTFs of the system and the DOLP, which scales down their noise power. Since the non-ideal MTF spatially correlates the noise, the NPS is not white; to determine the frequency-band-dependent attenuation, the MTF must either be precisely known or calibration must be performed empirically. The scaling factors are a system property, not a property of the imaged object.

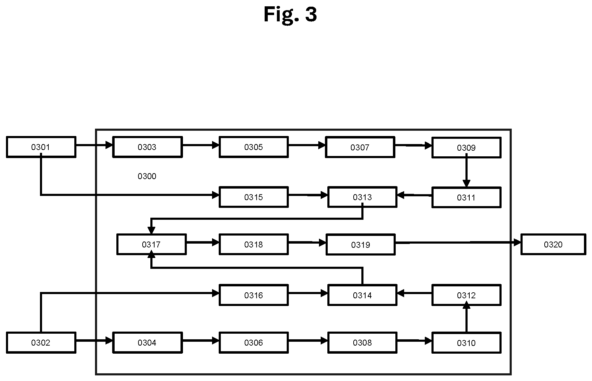

Figure 3 shows the method for empirical calibration of the scaling factors σᵣₐₜᵢₒ. The calibration is performed offline from a pair of video sequences recorded at different dose rates: a high-dose video 0301 and a low-dose video 0302. Both video sequences pass through parallel processing paths within the calibration system 0300.

From each video sequence, temporal differencing (0303, 0304) removes the object signal, leaving only the temporally uncorrelated noise. A region of interest is extracted (0305, 0306). The noise images are decomposed into frequency bands by the non-decimating multi-scale decomposition (0307, 0308). For each frequency band, the dispersion of the detail coefficients is determined by a robust estimator (0309, 0310). The dispersion values are divided by √2 to normalize to the standard deviation of single frames (0311, 0312), since temporal differencing increases the variance by a factor of 2.

A mean video is computed from the entire input video for high dose 0315 and low dose 0316 respectively, yielding a basis video without multi-scale decomposition. An SNR video in multi-scale domain is computed (0313, 0314) by dividing the basis video by the noise video in multi-scale domain. The two SNR videos are divided to form sigma ratio videos 0317.

Averaging along the spatial axes of each layer 0318 and subsequent averaging of all resulting temporal values 0319 yield the vector of band-specific scaling factors σᵣₐₜᵢₒ 0320. The calibration is object-independent: the imaged object serves solely as a source of a particular signal-to-noise ratio and does not enter into the resulting scaling factors.

When measuring in this manner, the resulting standard deviations deviate systematically from theoretical variance propagation through the filter cascade, as shown in the following figure.

Figure4 shows the measured normalized noise standard deviation σₖ/I̅ as a function of frequency band at two different dose rates. The abscissa 0405 shows the frequency bands D1, D2, D4, and D8. The ordinate 0406 shows the standard deviation of the detail coefficients normalized to the mean intensity I̅. For each dose rate, two curves are shown: a measured curve from empirical calibration and a theoretical curve from variance propagation through the low-pass filters.

At low dose, the measured standard deviation 0401 lies systematically above the propagated standard deviation 0403, particularly in the finest frequency band D1. At high dose, the same effect is observed: the measured standard deviation 0402 exceeds the propagated standard deviation 0404. The discrepancy between measurement and propagation is largest in the finest frequency band and decreases toward coarser bands.

The figure demonstrates that a purely theoretical propagation model underestimates the actual noise standard deviation in the frequency bands. This systematic deviation establishes the necessity of empirical calibration of the scaling factors σ_ratio instead of model-based calculation. Despite this deviation, the ratio between the measured standard deviations at different dose rates remains well-defined and can be used to construct matching noise distributions.

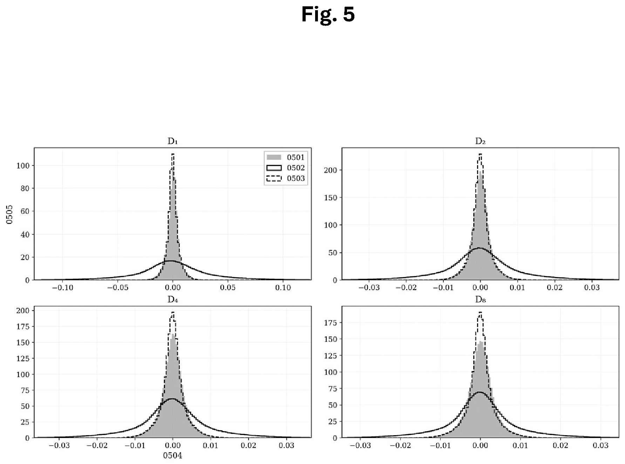

Figure5 shows the effect of the scaling factors σ_ratio by means of histograms of the normalized detail coefficients. The abscissa 0504 shows the normalized detail coefficient Dₖ/I̅, the ordinate 0505 shows the count. The figure is divided into four sub-figures for the frequency bands D1, D2, D4, and D8. Each sub-figure shows three distributions: the distribution at high dose 0501, the distribution at low dose 0502, and the low-dose distribution multiplied by the band-specific scaling factor σᵣₐₜᵢₒ 0503.

The low-dose distribution 0502 is broader than the high-dose distribution 0501, reflecting the higher noise at lower dose rate. After multiplication with σᵣₐₜᵢₒ, the scaled distribution 0503 collapses onto the high-dose distribution 0501. The agreement of the distributions after scaling demonstrates that the empirically determined scaling factors correctly reproduce the noise characteristic of the target dose rate.

The histograms thus demonstrate that matching noise distributions can be produced based on empirical calibration, without requiring a theoretical model of the noise propagation through the system.

An alternative embodiment does not measure the scaling factors directly but calculates them via the fundamental formula from the system parameters r and α, which are in turn determined from the measurement data. The scaling factors obtained in this manner are scene-dependent, since the parameter r varies with the imaged object, and therefore not dose-invariant.

### Temporal Filtering with Motion-Adaptive Mixing

A preferred embodiment combines the spatial correction with temporal filtering at several lower scales. Unlike spatial filtering, which attenuates noise and object signal equally, temporal filtering exploits the different temporal structure of both components: noise is uncorrelated from frame to frame in the sequence, while the object signal remains constant at standstill. A recursive filter with infinite impulse response (IIR) on the detail coefficients Dₖ of each scale therefore converges toward the object signal at standstill. The residual between input signal and filter state contains only noise.

The IIR filter state S_{k,t} for each scale k is calculated as: ${S}_{k , t} = α ⋅ {D}_{k , t} + \left(1-α\right) ⋅ {S}_{k , t - 1}$

The filter constant α is related to the dose factor DF by α = 2/(DF + 1). At a dose factor DF = 7, α = 0.25, corresponding to an effective averaging over seven frames.

An adaptive mixer detects motion based on the normalized residual and switches to the unfiltered single frame during motion to avoid trailing artifacts. The shift-invariant decomposition simplifies the normalization of such a mixer: since no filter-induced position dependence exists, a single threshold per frequency band suffices.

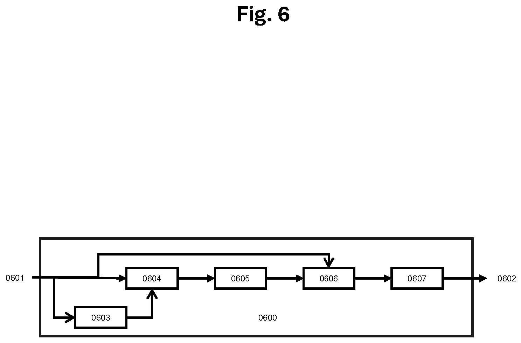

Figure 6 shows the forward signal flow through a mixer module 0600. The figure shows the data path in simplified form; the IIR feedback and the mixer return path are not depicted. The mixer module is instantiated in multiple lower frequency bands.

A detail coefficient D_{k,t} 0601 is fed to an infinite impulse response (IIR) filter 0604. The IIR filter state S_{k,t-1} 0603 enters the filter as feedback. The motion detector 0605 computes a motion measure from the residual between the uncorrected input D_{k,t} and the IIR filter state. Only the uncorrected signals enter the residual computation, not the σ_ratio-scaled values. A mixer 0606 weights between the filtered state during stillness and the unfiltered input during motion based on the motion measure. Only the output of the mixer undergoes σ_ratio scaling 0607, yielding the corrected detail coefficient 0602.

The σᵣₐₜᵢₒ scaling thus occurs after motion detection and after mixer weighting. This ensures that the same dose transformation is applied to the object during both stillness and motion, without the motion detection being distorted by the scaling.

A preferred embodiment references the IIR filter constant α and the spatial correction factors σ_{ratio,k} to the same dose factor DF, corresponding to a sequential architecture of temporal filtering followed by spatial filtering. At standstill, temporal averaging reduces the noise by the factor √DF. The mixer passes the IIR state, and the spatial correction operates on reduced noise and the object. During motion, the mixer switches to the IIR input image. The spatial correction with σ_ratio reduces the noise by the same factor √DF as the object. The transition between standstill and motion is performed by weighting with sigmoids or related functions.

The advantage is that a single user parameter DF determines the denoising of the overall system, that this parameter is calculable and calibratable, and that the object appears at a constant dose level regardless of motion. A further advantage is the low structural and functional complexity of the algorithm and the circuit.

### FPGA Implementation

### FPGA Implementation of the Non-Decimating Multi-Scale Decomposition

The non-decimating multi-scale decomposition processes all layers at full spatial resolution of the input image. On an FPGA, full-frame storage for video streams is only available in external RAM, which is required for the IIR filter states. The multi-scale decomposition must therefore be computed in streaming mode. The limiting primitives are block RAMs for line buffers.

A decimating decomposition reduces line buffer length in higher layers in theory. In practice, this advantage does not materialize: block RAM primitives have a fixed size (typically one kilobyte), so a half-filled block RAM still consumes one block RAM. Additionally, decimation requires extra block RAM for downsampling (buffering full lines to discard every second one) and for upsampling (interpolation during reconstruction). Furthermore, latency matching of decimated data streams requires additional buffers, and the design complexity is considerably higher. A non-decimating decomposition is therefore marginally more expensive in block RAM but significantly simpler to build.

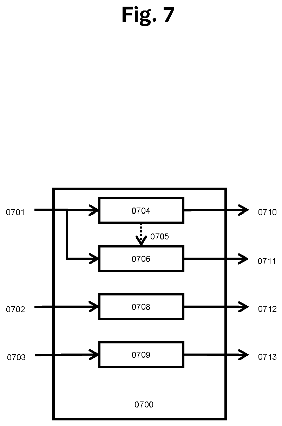

The implementation is based on a filter module with bypass 0700 serving as a reusable building block (Fig. 7). An input signal I 0701 is fed to a processing block 0704 comprising a low-pass filter and image processing. The low-pass filter is implemented as a 3×3 binomial filter, composed of two orthogonal one-dimensional 3×1 binomial filters. A 3×1 filter implements convolution with the kernel [1, 2, 1]/4 using two additions and a division by 4, realized as a bit shift by 2 positions. The processed signal is available at the output 0710.

An internal bypass 0706 routes the unfiltered input signal with matched latency to a further output 0711, so that the unfiltered and the filtered signal are available at the module output with identical latency. An optional input 0705 permits feeding the input signal after the line buffering of the low-pass filter, allowing the same line buffers to be used for both signal paths.

A result channel R (0702, 0712) and a data channel D (0703, 0713) are routed through the module via external bypasses (0708, 0709) with matched latency. The inputs R and D are not connected for the first module of the cascade; the result channel is used after processing of the first layer when a result is available and the data channel is used for concatenating multiple filter modules to high order binomial filter modules where the input must be forwarded.

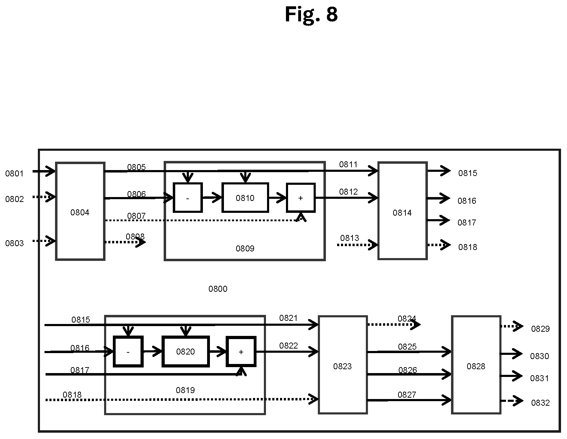

The multi-scale decomposition is constructed by cascading filter modules (Fig. 8). A pipeline architecture 0800 consists of cascaded filter modules with bypass and interleaved layer processing modules.

An input image 0801 is fed to a first filter module 0804. The filter module produces a filtered signal 0805 and routes the unfiltered signal with matched latency to the output 0806. A result channel 0802 and a data channel 0803 are not connected or initialized with default values for the first module of the cascade.

A layer processing module 0809 receives the filtered signal 0805 and the unfiltered signal 0806. The result channel 0807 and the data channel 0808 are not connected for the first layer but are used in subsequent layers where accumulated results or intermediate filter outputs serve as inputs. A subtractor forms the detail coefficient as the difference between the unfiltered and the filtered signal. Image processing 0810 normalizes the detail coefficient by division by the basis component and multiplies the result by a band-specific scaling factor. An adder adds the processed layer contribution to the result channel. At the output of the layer processing module, the filtered signal 0811, the accumulated result channel 0812 are available, and the data channel 0813 is open.

A second filter module 0814 receives these signals and produces the inputs (0815, 0816, 0817, 0818) for the next layer. By concatenation of further filter modules, additional detail layers with progressively larger effective kernel radii are formed. To double the kernel radius from layer to layer, the number of cascaded filter instances doubles per layer. The number of filter modules and associated line buffers therefore grows exponentially with decomposition depth.

The result channel traverses all layers and accumulates the respective layer contribution at each stage. This runtime result accumulation provides significant block RAM savings starting from layer 4 (D4). For layers 1-3, parallel computation is possible with marginally higher block RAM cost. From layer 4 on, the savings in line buffers become significant to mandatory for streaming implementation on FPGA.

After the second filter module, a second layer processing module 0819 with image processing 0820 receives the signals. The filtered signal 0821 and the updated accumulated result channel 0822 are forwarded to a subsequent filter module 0823 while the data channel 0818 still remains unused. The filter module forwards all signals (0824, 0825, 0826, 0827) to the next filter module 0828. Filter modules in higher layers are sequentially connected to resemble binomial filters of exponential orders of the original one. This makes the data channel a required connection on 0827 to 0829 as the input image must be preserved over multiple convolutions. The interface 0829 input, 0830 lowpass and 0831 result channel would further connect layer 3 processing where 0832 delayed output is not needed again. Lowpass and result channel can terminate processing after any processing module.

The stream-based design permits implementation across multiple FPGAs. In a preferred embodiment, the decomposition comprises 3 to 5 detail layers, depending on the available memory resources of the logic device.

The runtime result accumulation described above constitutes a platform-independent architectural principle. Because the non-decimating multi-scale decomposition produces all detail layers at the full spatial resolution of the input image, the layer contributions can be accumulated incrementally into a single result channel without requiring simultaneous storage of all intermediate layers. This property holds independently of the computing platform: on a programmable logic device, it reduces the required line buffer resources; on a parallel computing unit with multiple processing cores and hierarchical memory, it reduces the traffic to global main memory. In one measured embodiment on a parallel computing unit, the memory traffic per frame is reduced to approximately one third compared to an implementation that writes all intermediate layers to global main memory. The non-decimating multi-scale decomposition is thereby executable in real time at frame rates of 25 Hz and above at a resolution of 2048 × 2048 pixels.

A further platform-independent advantage of the non-decimating decomposition is the absence of boundary artifacts. Decimating multi-scale decompositions require downsampling and subsequent interpolation at each scale transition, which introduces reconstruction artifacts at object boundaries. In the non-decimating decomposition, all layers and the basis component B are available at every pixel position without interpolation. The normalizations D/B and D/√B are therefore pointwise operations free of boundary artifacts. This property is essential for the dose-invariant scaling in the D/B domain, where interpolation artifacts would introduce spatially varying scaling errors, and for the noise suppression in the D/√B domain, where the constant noise standard deviation required for a fixed threshold depends on the exact availability of √B at each pixel.

### Domain Cascade

A preferred embodiment passes the detail coefficients through several processing stages in different working spaces. The working spaces are separated from one another by basis changes, each change being performed by multiplication or division with a function depending on the basis. An X-ray imaging system comprises an X-ray source, a flat-panel detector for acquiring X-ray images, and a computing unit for image processing.

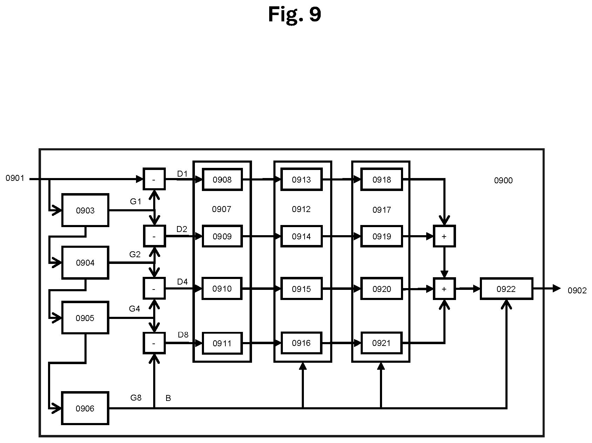

Figure 9 shows an overall system 0900 for image processing with a domain cascade. An input image 0901 is decomposed into Gaussian images G1, G2, G4, and G8 by cascaded low-pass filters (0903, 0904, 0905, 0906). The Gaussian image of the coarsest stage forms the basis component B. Subtractors form the detail coefficients D1, D2, D4, and D8 as differences between successive Gaussian images.

The detail coefficients pass through three processing stages in different working spaces. A first processing stage 0907 operates in a Laplace domain. The processing blocks (0908, 0909, 0910, 0911) perform mixing between filtered and unfiltered signal based on a motion measure for each frequency band.

A second processing stage 0912 operates in a Dₖ/B domain. The detail coefficients are divided by the basis component B and multiplied by band-specific scaling factors σᵣₐₜᵢₒ. The processing blocks (0913, 0914, 0915, 0916) perform this scaling for each frequency band. In this domain, the detail coefficients are dose-invariant.

A third processing stage 0917 operates in a Dₖ/√B domain. A gamma transfer function applies a non-linear characteristic to the detail coefficients. The processing blocks (0918, 0919, 0920, 0921) perform this transformation for each frequency band. In this domain, the noise exhibits constant standard deviation, so that a fixed threshold for noise suppression is applicable.

The processed detail coefficients are summed across frequency bands by adders. A reconstruction module 0922 multiplies the sum with a transformed basis component and produces the output image 0902. The transformation of the basis component is a degree of freedom of the embodiment and comprises an identity mapping, a square root function, or an arbitrary gamma function.

The transitions between working spaces are performed by multiplication or division with the basis component B or its square root √B. Since the basis component is available to all processing stages, the transitions are trivial pointwise operations.

Each domain normalizes to the variable to be manipulated. This is dose in the D/B domain and noise standard deviation in the D/√B domain. The manipulation is performed signal-independently based on the normalization variable.

This achieves dose correction, noise suppression, and contrast enhancement in a single pipeline, with each processing stage operating in the working space optimal for its task. This architecture is only possible with the non-decimating multi-scale decomposition, in which the basis component B is available pixel-wise at each processing stage. The domains can be combined independently of one another.

The characteristic feature of the device is an X-ray imaging system with an X-ray source, a flat-panel detector, and a computing unit, wherein the computing unit performs a non-decimating multi-scale decomposition and switches between normalization variables within a scale. The computing unit can be implemented as an FPGA, GPU, or other parallel computing unit.

### Overall System

The features described individually above form a complete image processing system in their entirety. The features are not to be understood as isolated method steps but as components of a unified signal path that can be realized in various expansion stages.

Figure 1 shows a complete operative overall system in its minimal expansion stage. The input image is decomposed into detail coefficients and a basis component by a non-decimating multi-scale decomposition. The detail coefficients are normalized by the basis component and multiplied by band-specific scaling factors. Reconstruction is performed multiplicatively from the sum of the scaled coefficients and a reconstruction term derived from the basis component. This system is independent of the concrete implementation of the multi-scale decomposition and independent of the method for determining the scaling factors.

The minimal system can be extended in several directions. A first extension concerns temporal filtering. Inserting an IIR filter and a motion detector before scaling achieves temporal noise suppression without the dose transformation affecting filter behavior. A second extension concerns gamma correction. Transitioning to D/√B space before reconstruction enables amplitude-controlled contrast adjustment with a fixed threshold. A third extension concerns the perceptual basis. The reconstruction module combines all processed layers and multiplies the result with a transformed basis component, where the transformation can be an identity mapping, a square root function, or an arbitrary gamma function.

The preferred embodiment for fluoroscopy combines all three extensions in a domain cascade with four working spaces as shown in Figure 9. The core signal path of Figure 1 is contained in Figure 9. The extensions can be used independently of one another, yielding partial combinations between the minimal system and the complete domain cascade. The concrete choice of expansion stage depends on the requirements of the application.

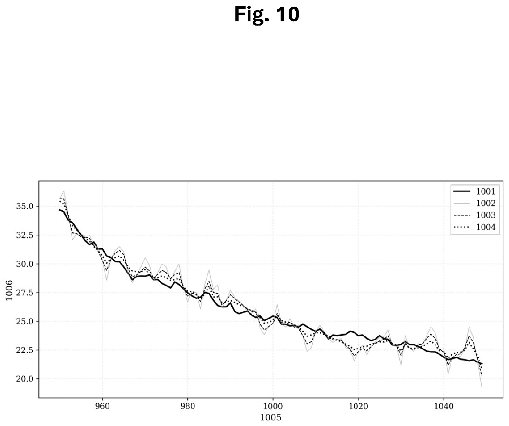

Figure10 shows a cross-section along an image row of a low-dose X-ray image. The abscissa 1005 shows the image position in pixels, the ordinate 1006 shows the signal value in arbitrary units. The temporally averaged object signal 1001 serves as reference and shows the actual profile of object edges without noise. The raw signal 1002 of a single low-dose frame exhibits strong fluctuations due to quantum noise.

The curve with σᵣₐₜᵢₒ correction 1003 shows the result of dose transformation by σᵣₐₜᵢₒ scaling. The scaling attenuates the noise and brings the raw signal closer to the object reference. The curve with γᵣₐₜᵢₒ correction 1004 shows the result of additional amplitude-controlled gamma correction applied to the σᵣₐₜᵢₒ-corrected image. The gamma function further attenuates noise in the region below 3σ, bringing the signal even closer to the temporally averaged reference.

The comparison demonstrates that σᵣₐₜᵢₒ scaling reduces noise while preserving object edges, and that subsequent gamma correction in the Dₖ/√B working space provides additional noise suppression without affecting edge rendering.

### Advantages

The advantages achieved with the invention consist in particular in that each of its core features makes an independent contribution to image quality, to the reduction of calibration effort, and to real-time capability, and that the combination of these features yields a structurally simpler and at the same time more broadly applicable solution compared to the prior art.

Halo-free decomposition. The non-decimating decomposition is shift-invariant and structurally free of aliasing. Noise propagation through the decomposition stages is spatially exact; position-dependent deviations, as occur in decimating Laplacian pyramids and were quantified at approximately 2.6% in M. Hensel et al. 2007, are eliminated. Correction of the detail coefficients by a single scalar factor per frequency band is therefore exactly possible.

Object-independent calibration. The empirical calibration from two video sequences at different dose rates is object-independent; the imaged object serves exclusively as a source of a defined signal-to-noise ratio, and the deviation of the resulting scaling factors between different objects is below 3%. Self-calibration from a single dose rate eliminates the need for access to multiple dose levels and enables calibration on the installed system under operating conditions without a phantom.

Reduced parameterization. Scaling by a single band-specific factor σ_ratio replaces the multiparameter correction functions common in the prior art. The fundamental formula reduces calibration to two system parameters r and α; the user-selected dose factor DF replaces the system-side readjustment upon dose changes. Compared to Philips EP 3 224 800 B1 with five parameters per band in a nonlinear function, both the detector-specific coefficient sets and the intensity dependence within a band are eliminated.

Domain separation. Normalizing the detail coefficients by the basis component leads to a dose-invariant working space in which dose correction, noise suppression, and contrast enhancement are performed as separate processing stages. Each stage operates in the space optimal for its task and can be parameterized independently of the others. Temporal filtering is performed before scaling, with the IIR filter operating on the raw detail coefficient, followed by mixing, and only then is the σᵣₐₜᵢₒ scaling applied. This sequence avoids coupling between dose changes and filter behavior. The transition to D/√B space in the third processing stage enables gamma correction with a fixed threshold, allowing contrast rendering to be adjusted independently of dose rate.

Efficient platforms. The non-decimating multi-scale decomposition requires higher computational effort than the decimating variant at full spatial resolution of all layers. The pipeline architecture on a programmable logic device with result accumulation at runtime nevertheless enables real-time processing without a frame buffer, making the DOLP decomposition usable for the first time in imaging systems with real-time requirements. Runtime result accumulation reduces the memory resources required for the non-decimating multi-scale decomposition on any computing platform: on a programmable logic device, it reduces the number of required line buffers; on a parallel computing unit, it reduces the traffic to global main memory. Both architectures thereby permit a larger number of decomposition stages than comparable decimating implementations on the same hardware, enabling finer frequency resolution and a better image result.

Each of the features mentioned above is in itself a subject of the invention and can be used independently of the other features. The combination in the preferred embodiment of the domain cascade achieves the full effect; the individual features can be claimed in any partial combinations. Method, device, and calibration method are disclosed as equal aspects of the invention.

## Claims

1. A computer-implemented image processing method comprising the steps of:
receiving an X-ray image;
multi-scale decomposing said image into spatial frequency component images comprising at least a low pass component image and at least one further spatial frequency component image;
normalizing the at least one spatial frequency component image, based on the low pass component image, to obtain at least one normalized spatial frequency component image;
modifying the at least one normalized spatial frequency component image to obtain at least one modified spatial frequency component image;
combining said low pass component image and the at least one modified spatial frequency component image into a reconstructed version of the received image; and
outputting said reconstructed version of the received image,
**characterized in that**
the at least one spatial frequency component image is normalized such that a coefficient of the at least one normalized spatial frequency component image corresponds to a coefficient of the at least one spatial frequency component image, divided by a coefficient of the low pass component image or divided by a noise variance of the X-ray image.

2. The method of claim 1, **characterized in that** the step of multi-scale decomposing is shift-invariant.

3. The method of one of the preceding claims, **characterized in that** the spatial frequency component images retain a spatial resolution of the X-ray image.

4. The method of one of the preceding claims, **characterized in that** the step of multi-scale decomposing corresponds to sampling the image with Laplacian operators of many scales.

5. The method of one of the preceding claims, **characterized in that** the step of modifying the at least one normalized spatial frequency component image comprises multiplying coefficients of the spatial frequency component image by a scaling factor (σᵣₐₜᵢₒ), wherein the scaling factor is specific to a frequency band of the at least one normalized spatial frequency component image.

6. The method of claim 5, **characterized in that** the scaling factor was obtained empirically.

7. The method of one of the preceding claims, **characterized in that** a perceptual gamma correction is applied to the at least one spatial frequency component image.

8. The method of one of the preceding claims, **characterized in that** a temporal recursive filter with motion-adaptive mixing is applied to the at least one spatial frequency component image.

9. The method of claim 8, wherein a filter constant of the temporal recursive filter is selected such that temporal filtering achieves a noise suppression factor as spatial correction.

10. The method of one of claims 5 to 9, wherein the scaling factor corresponds to a ratio of noise levels at different X-ray dose rates.

11. Computer program-product, comprising instructions that, when executed by a computer, implement a method according to one of claims 1 to 10.

12. Image processing device, adapted to execute a method according to one of claims 1 to 10.

13. A neural network for X-ray dose enhancement comprising a layer architecture that normalizes band-pass component images by low-pass component images.

14. Method for calibrating a method for X-ray dose enhancement, wherein scaling factors are derived from calibration videos of static objects at different dose rates and for multiple bandpass images by estimating relative factor of dose propagation from noise power spectrum transfer in the optical system.

15. A computer implemented method for image processing, comprising the step of computing a spatial multiscale decomposition of images of several bandpass and at least one lowpass component of each of said images, **characterized in that** the method is an on the fly processing, such that a result accumulation on band pass images is used, which accumulates the processed bandpass component images in a way, that only one, or portions of one, band pass component image is stored in registers or others computer at one point of time.

16. FPGA implementation of the method according to claim 15, wherein results are accumulated row by row.

17. A graphics processing unit (GPU) implementation of the method according to claim 15.

18. A neural network implementation of the method according to claim 15.

19. A computer-implemented image processing method according to claim 1, implemented in a computational cascade with at least one further normalization of spatial frequency component images before or after the normalizing step of claim 1.

20. A computer-implemented method for training an artificial intelligence, a neural network in particular, based on output data of the previously disclosed methods.
